# EUROPEAN PATENT APPLICATION

(11) **EP 0 977 462 A2**
(43) Date of publication of application: **02.02.2000**
(21) Application number: 99401634.3
(22) Date of filing: 01.07.1999
(51) Int. Cl.: H04Q 11/04

(54) **Method and system for controlling links in an integrated services digital network**

(30) Priority: 31.07.1998 ES 9801643
(71) Applicant: ALCATEL, 75008 Paris (FR)
(72) Inventor: Gonzalez de Prado Diaz, José Lu s, 28043 Madrid (ES); Viana Lozoya, José Lu s, 28803 Alcala de Henares, Madrid (ES)
(74) Representative: Feray, Valérie

(57) **Abstract**

The method of the invention consists mainly in the partial analysis of the HDLC frames interchanged between a local switching exchange (11) and a subscriber network terminal equipment (15-j). The HDLC frames are generated by means in the local exchange (11) for transporting the information in a call established in an ISDN network.

A first transfer unit (21) verifies the value of the service access point identifier SAPI contained in the HDLC frame. Depending on its value, it allocates an appropriate number of radio channels to the call to be established.

As a result of the foregoing, an optimum allocation of the radio channels is produced and, in addition, efficient management thereof takes place.

## Description

### OBJECT OF THE INVENTION

The present invention relates to a method for inspecting the enabled/disabled state of a basic access to an integrated services digital network (ISDN) when it is not possible to do so through the supervision of the physical layer.

### STATE OF THE ART

An integrated services digital network (ISDN) provides an extensive range of services, including voice and non-voice services, for its subscribers, by setting up end-to-end digital links. The subscribers access said services through a set of user/multifunction network interfaces.

Nowadays, a spectacular increase is taking place in the demand for teleservices from the subscribers to telecommunications networks. This poses for the operators the need to extend their networks quickly and at a reasonable cost for the telecommunications system operators.

The quick deployment of telecommunications systems that include ISDN networks, for example, is frequently done by making use of radio transmission on the subscriber side, such as a radio access system.

Thus, a local switching exchange is connected via transmission lines to a fixed unit that is connected via radio with a set of remote units located within its coverage area.

Each remote unit is connected by means of a wired network to a set of network terminals, and each of the network terminals is connected over a passive bus to a plurality of network terminal equipments located in the subscriber homes.

The telecommunications system so formed offers the advantage of having an attractive price for the operator, as well as eliminating the limitations in range which arise in the case of transmission over cable line, due to problems with attenuation, and nonetheless presents the drawback that the radio resources (traffic channels) are limited.

Radio access systems permit the use of mirror interfaces for transmitting, via radio, the digital data that arrive at a first data unit from the local exchange, to a second data unit which receives the reflected digital data and sends them to the subscribers that are connected to it.

In the downlink direction when, from the telecommunications system transport network, a call enters the local exchange, the latter initiates the call set-up process by connecting ringing current to the appropriate line. This is done by means of a radio channel search in the fixed unit. When a free channel is found, this is communicated to the corresponding remote unit where the line is located, that is, to the network terminal to which the terminal equipment of the end subscriber is connected.

As a consequence of the foregoing, the local exchange activates, in the first place, layer 1 (control protocol of the physical medium) of the mirror line, the fixed unit proceeding to allocate to the call in process three traffic channels (two B channels and one D channel, "2B+D"), from the bank of radio channels available at the time.

This process of allocation of a fixed number of radio channels independently of the nature of the information interchanged in each call and for the time that this lasts, results in an inefficient use of the bank of radio channels, since if the information interchanged is data, for example X.25 packets, it is only necessary to allocate one D channel. It should be noted that in this case there would have been two B channels allocated to the set up communication that are not used.

On the other hand, mention has to be made that models exist of local switching exchanges or of configuration versions of these for determined operators, which proceed with the enabling and disabling of the physical layer according to the duration of each call, implying that the fixed unit of the radio access system does not have a criterion for allocation and release of radio channels with respect to the call in process of set-up or clearing, respectively.

In brief, it is desirable to provide the operator with a method for allocating the radio channels available in such a manner that their allocation on a call set-up request is carried out as a function of the characteristics of the communication it is intended to establish. And, in addition, a criterion is provided for the release of the radio channels implicated in a call, when this is cleared down.

### CHARACTERISATION OF THE INVENTION

Thus, an object of the present invention is to provide an efficient method for allocating and releasing radio channels, belonging to a radio communications system, over which the information relative to an incoming call to a local switching exchange is transported in order to be directed to an end subscriber, who is subscribed to an integrated services digital network (ISDN).

Another object of the present invention is to provide a criterion for carrying out the allocation and release of the radio channels, as a function of the nature of the information (voice, data, video, etc.) interchanged between the subscribers who have set up the communication.

All the above without increasing the complexity of the process of call set-up, neither in the local exchange, nor in the network terminal.

The method of the invention consists mainly in partially analysing the information interchanged between the local exchange and the end subscriber. The information is contained in frames which are formed according to an HDLC (High Level Data Link Control) protocol. These HDLC frames are always generated for transporting the information of a call over a communications link in an integrated services digital network (ISDN).

Once the analysis of the HDLC frame has been carried out, the appropriate radio channels are allocated for the call that it is desired to set up.

As a result of the foregoing, an optimum allocation of the radio channels is produced and, moreover, said channels are efficiently managed.

### BRIEF DESCRIPTION OF THE FIGURES

A more detailed explanation of the invention is provided in the following description, based on the attached figures, in which:
- figure 1 shows in block diagram form an integrated services digital network including a radio access system according to the invention,
- figure 2 shows in block diagram form an embodiment of a fixed unit of the radio access system according to the invention, and
- figure 3 shows in block diagram form an embodiment of a remote unit of the radio access system according to the invention.

### DESCRIPTION OF THE INVENTION

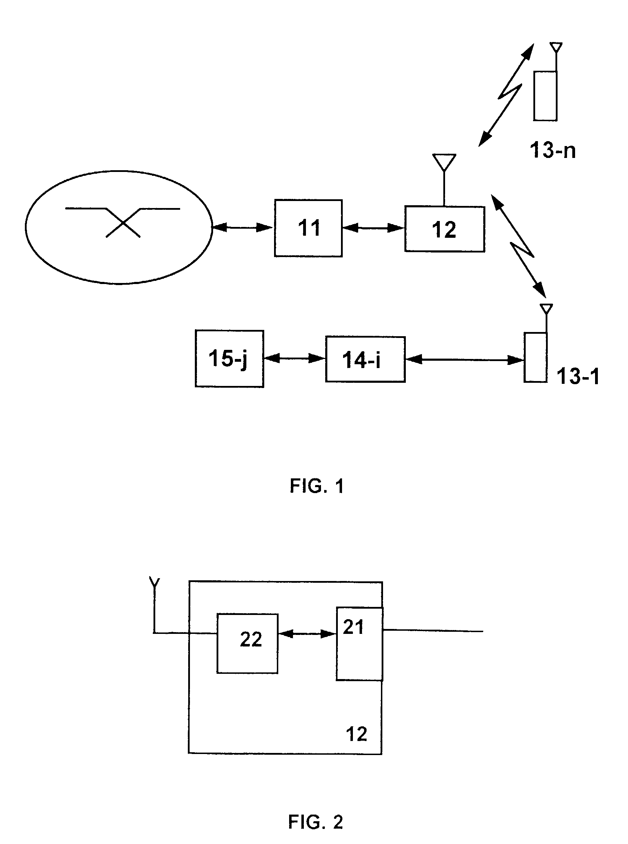

With reference to figure 1, an integrated services digital network (ISDN) is shown in which part of the communications link is carried out by means of radiocommunications.

In a practical embodiment of the invention, a local switching exchange 11 provides access to a transport network such as a public switched telephone network (PSTN).

The local exchange 11 incorporates line means in order to be connected via digital transmission lines to a first data transfer unit 21 which is included in a fixed unit 12, shown in figure 2, belonging to a radio access system.

The first transfer unit 21 is connected with a first transmit-receive means 22 belonging to the fixed unit 12, for sending and receiving data over radio channels.

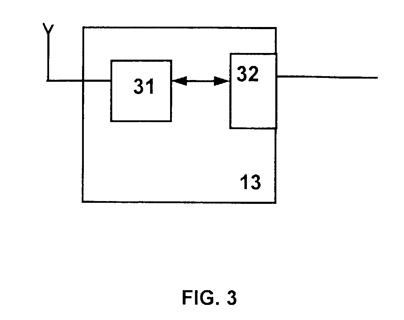

The data sent are received by a remote unit 13, shown in figure 3, through a second transmit-receive unit 31 connected to a second data transfer unit 32. The remote unit 13 also belongs to the radio access system.

A set of network terminals 14-1 to 14-m is connected by a cable network to the remote unit 13, and each network terminal 14-i is connected by means of a passive bus to a plurality of subscriber network terminal equipments 15-1 to 15-8, located in the home of an ISDN subscriber.

In the downlink direction, when an incoming call arrives in the local exchange 11 from the PSTN, the line means generate ringing current to be sent to the end subscriber, thus starting a call set-up process.

The line means generate frames according to an HDLC (High Level Data Link Control) protocol, which contains the information relative to the call, such as the nature thereof (voice, data, video, etc.).

The HDLC frame formed is transmitted over the digital links to the fixed unit 12, being received in the first transfer unit 21.

As a function of the type of information to be transmitted to the end subscriber, an allocation of basic access channels, known as 2B+D structure, takes place. Each channel (B or D) uses a different data link layer protocol, layer 2, according to the OSI reference model.

In the particular case of the D channel, the data link layer protocol used is termed LAP-D. This concerns an ISDN specific protocol and makes allowance for the capacity of channel D to be shared by various subscriber terminal equipments 15-j connected to the same network terminal 14-i.

The LAP-D protocol is defined in the recommendation Q.921 of the International Telecommunication Union-Telecommunication Standardisation Sector. El LAP-D protocol belongs to the HDLC protocols family, whereby the data link layer connections can be initiated by the local exchange 11 or by the network terminal equipments 15-j (where j = 1, ..., 8) and there is no transfer of information during periods of inactivity and it is permitted to have various data link layer connections open simultaneously.

The transfer unit 21 comprises means capable of analysing partially the information contained in the HDLC frames for, depending on the information obtained, allocating the number of radio channels necessary to set up a call.

Specifically, an analysis is made of a subfield contained in the address field that identifies the logical data link to which the HDLC frame corresponds.

The subfield holds 6 bits and is termed the service access point identifier SAPI. In all the HDLC frames it is obligatory to have an address field present, and therefore the SAPI subfield.

The SAPI subfield permits to distinguish whether an HDLC frame corresponds to signalling (SAPI = 0), to X.25 packets (SAPI = 16), to data link layer management procedures (SAPI = 63), etc, since the SAPI adopts different values depending on how it is employed, said values being normalised.

The first transfer unit 21 checks the value of the SAPI subfield and, depending on said value, determines the number of radio channels that will be transmitted by the first transmit-receive unit 22 for setting up the call.

The allocation of radio channels is carried out according to the following table:
- SAPI = 0, three channels are allocated from the bank of radio channels, and
- SAPI ≠ 0, a single radio channel is allocated for sending the D channel in transparent mode, either as X.25 packets or with data link layer management messages.

Thus it is not necessary to have processing means for the data link layer in the first transfer unit 21, as the entire HDLC frame is not being processed.

The data reflected in the remote unit 13-k (Where k = 1,....,n) and received over radio channels by the second transmit-receive unit 31, are sent to the second data transfer unit 32, which comprises means for regenerating the HDLC frames transmitted by the local exchange 11.

These HDLC frames are sent to the subscriber network terminal equipment 15-j through the corresponding network terminal 14-i (where i = 1, ..., n) implicated in the call.

The data transfer units 21, 32 are interfacing and linking means in order that the local exchange 11 can see a network terminal 14-i, and the network terminal 14-i can see the local exchange 11.

The use of mirror interfaces between the local exchange 11 and the network terminals 14-i obviates the processing of layer 2 (data link control protocols) and of layer 3 (network control protocols), according to the OSI reference model, for the allocation of radio channels to the call in course.

Consequently, use is made of a mirror interface, obviating thereby the development and installation in the first data transfer unit 21, which dialogues with the ISDN line means located in the local switching exchange 11, of the complete data link layer and of the network layer, both comprising complex and costly modules, and without any other additional function at this point of the interface to justify their development and installation. In this way, the problem of optimum allocation of radio channels is resolved in a simpler manner, as previously described.

For radio transmission, the non-disabling of the physical layer of a data link represents a problem, since there are radio channels permanently allocated to communications even presenting periods of inactivity. The radio channels are limited and, therefore, their management must be optimised.

To release the radio channels allocated to a call, the first data transfer unit 21 verifies the absence of interchange of HDLC frames during a determined period, said period of time having to be greater than that required in LAP-D for the sending of RR (Receiver ready) frames for data link maintenance. The RR frames are transmitted periodically when the data link is active, precisely to confirm its effectiveness.

That above description implies the disappearance of the data link layer and, consequently, the absence of data interchange between the local exchange and the end network terminal equipment 15-j, thus the transfer unit 21 can release the radio channels implicated in the call.

So, in the case of this last transfer unit 21 observing the absence of the subfield SAPI = 0, three radio channels are released; and in the case of subfield SAPI ≠ 0, one radio channel is released.

## Claims

1. **Method for controlling digital links in an integrated services digital network** (ISDN), established between a local switching exchange (11) and at least one network terminal equipment (15-j) through a fixed unit (12) that communicates via radio with at least one remote unit (13); **characterised** by analysing information contained in a subfield of an address field of an HDLC frame by means of a first data transfer unit (21) included in said fixed unit (12), said HDLC frame being generated by means contained in said local switching exchange (11) during the duration of a call.

2. **Method for controlling** according to claim 1, **characterised** in that said subfield has 6 bits and is termed service access point identifier (SAPI).

3. **Method for controlling** according to claim 2, **characterised** by determining number of radio channels to be employed in each call by means included in said first data transfer unit (21), said number of radio channels are a function of the value held by said service access point identifier (SAPI), among a group of at least two values.

4. **Method for controlling** according to claim 3, **characterised** by releasing said radio channels employed in said call in the absence of said service access point identifier (SAPI), by means included in said first data transfer unit (21).

5. **Method for controlling** according to claim 4, **characterised** by releasing said radio channels employed in said call in the absence of said service access point identifier (SAPI) during a time greater than the sending time of frames for data link maintenance, by means included in said first data transfer unit (21).

6. **System for controlling digital links in an integrated services digital network** (ISDN), established between a local switching exchange (11) and at least one network terminal equipment (15-j) through a fixed unit (12) that communicates via radio with at least one remote unit (13); **characterised** in that said local switching exchange (11) is connected by means of digital transmission lines a said first data transfer unit (21) included in said fixed unit (12), for transmitting reflected data via radio to a second data transfer unit (32) included in said remote unit (13), in order to be sent, over a transmission line, to a network terminal (14-i).

7. **System for controlling** according to claim 6, **characterised** in that said fixed unit (12) includes means for analysing information included in a subfield of an address field of an HDLC frame generated by means included in said local switching exchange (11) during the duration of a call.

8. **System for controlling** according to claim 7, **characterised** in that said first data unit (21) includes means for determining number of radio channels to be employed in each call as a function of the value held by subfield known as service access point identifier (SAPI).

9. **System for controlling** according to claim 8, **characterised** in that said first data unit (21) includes means for releasing said radio channels employed in said call in the absence of said service access point identifier (SAPI).

10. **System for controlling** according to claim 9, **characterised** in that said first data unit (21) includes means for releasing said radio channels employed in said call in the absence of said service access point identifier (SAPI) during a time greater than the sending time of frames for data link maintenance.
